# EUROPÄISCHE PATENTSCHRIFT

(11) **EP 2 577 074 B1**
(45) Veröffentlichungstag und Bekanntmachung des Hinweises auf die Patenterteilung: **20.01.2016**
(21) Anmeldenummer: 11722086.3
(22) Anmeldetag: 31.05.2011
(51) Int. Cl.: F16B 25/10

(54) **SELBSTBOHRENDE SCHRAUBE**
SELF-TAPPING SCREW
VIS AUTOTARAUDEUSE

(30) Priorität: 07.06.2010 DE 102010017267
(43) Veröffentlichungstag der Anmeldung: 10.04.2013
(73) Patentinhaber: SFS Intec Holding AG, 9435 Heerbrugg (CH)
(72) Erfinder: PALM, Erich, CH-9434 Au (CH)
(86) Internationale Anmeldenummer: PCT/EP2011/058886
(87) Internationale Veröffentlichungsnummer: WO 2011/154279

(56) Entgegenhaltungen:
- EP-B1- 1 430 227
- CH-A- 50 995
- US-A- 4 477 217

## Beschreibung

Die Erfindung betrifft eineselbstbohrende Schraube mit einem Bohrteil und einem mit Gewinde und einem Kerndurchmesser versehenen Schaft, wobei der Bohrteil eine Mantelfläche und eine in Bezug auf eine Längsachse der Schraube außermittig angeordnete Bohrspitze hat und wenigstens eine erste Schneide aufweist, die in Bezug auf die Längsachse der Schraube schräg verläuft, und wobei die Bohrspitze auf einem gedachten Kreis um die Längsachse der Schraube liegt, dessen Durchmesser gleich oder im Wesentlichen gleich dem Kerndurchmesser ist.

Eine ähnliche selbstbohrende Schraube ist aus dem Dokument EP 1 430 227 B1 bekannt. Diese bekannte Schraube ist für den Einsatz bei Holz weder vorgesehen noch geeignet. Sie dient zur Befestigung eines plattenförmigen Gegenstands auf einem Unterbau, wobei der Unterbau üblicherweise aus Metall besteht, häufig aus Profilteilen aus dünnem Blech. Bei dem plattenförmigen Gegenstand handelt es sich üblicherweise um eine Verkleidungsplatte aus Keramik, Faserzement, Stein od. dgl. sprödem Material zum Herstellen einer Gebäudeverkleidung. Aufgrund von Sonneneinstrahlung wandert die Gebäudeverkleidung auf dem Unterbau. Deshalb werden in den Verkleidungsplatten Durchgangsbohrungen verwendet, welche die Befestigungsschrauben mit ausreichendem Spiel aufnehmen. Zu diesem Zweck werden üblicherweise selbstbohrende Schrauben eingesetzt, die mit quer zur Schraubenachse frei auskragenden Flügeln versehen sind, welche das Durchgangsloch wunschgemäß aufweiten. Die Schraube nach dem vorgenannten Dokument ist speziell dafür ausgebildet, ohne die Zuhilfenahme von solchen Flügeln ein den Schaft der Schraube mit Spiel aufnehmendes Durchgangsloch herzustellen, und zwar nur in dem plattenförmigen Gegenstand und nicht in dem dünneren, metallischen Unterbau. Dafür hat ihr Bohrteil eine in Bezug auf die Längsachse der Schraube außermittig angeordnete Bohrspitze und eine sich von der Bohrspitze aus über die gesamte Breite des Bohrteils erstreckende schräge Schneidkante. Die Bohrspitze bildet ab dem Beginn des Bohrvorganges eine Zentrierspitze für die Schraube, weshalb die Schraube ab dem Beginn des Bohrvorganges schräg angeordnet ist. Das Loch, das in dem plattenförmigen Gegenstand hergestellt wird, ist aufgrund der Kreisbewegung des Bohrteils nicht zylindrisch, sondern konisch aufgeweitet und nimmt in Richtung zu dem Unterbau im Durchmesser zu. Wenn die Bohrspitze schließlich die Unterseite des Unterbaus erreicht, ist das Loch auf seine maximale Größe aufgeweitet worden.

Mit der Schraube nach dem Dokument EP 1430 227 B1 kann zwar auch ein Durchgangsloch mit dem Kerndurchmesser des Gewindes der Schraube hergestellt werden, das gelingt jedoch nur, wenn ein axialer Abstand zwischen der Bohrspitze und einem Schnittpunkt der Schneidkante und der Längsachse der Schraube auf die Dicke des zu durchbohrenden Unterbaus abgestimmt ist. Demgemäß lässt sich ein solches Loch mit der bekannten Schraube nur in einem relativ dünnen Werkstück oder Unterbau herstellen, also z.B. in dünnem Stahlblech.

Eine weitere selbstbohrende Schraube, die ebenfalls eine außermittig angeordnete Bohrspitze hat, ist aus dem Dokument US 4 568 229 A bekannt. Beidseits der Bohrspitze hat die Schraube zwei Schneidkanten, die im Wesentlichen auf einem Durchmesser liegen und ein Loch schneiden, das im Durchmesser wesentlich kleiner als der Kerndurchmesser des Gewindes ist. Auch diese bekannte Schraube ist nicht für den Einsatz bei Holz bestimmt, sondern zum Einschrauben in einen Unterbau aus Stahlblech.

Noch eine weitere selbstbohrende Schraube ist aus dem Dokument DE 79 09 735 U1 bekannt. Dieses Dokument geht von einem Stand der Technik aus, bei dem es um das Eindrehen der Schraube in Blech geht, wobei in dem Blech keine Bohrung erforderlich ist, da die zum Eindrehen der Schraube erforderliche Bohrung durch die Schraube selbst erzeugt wird. Weiter wird als nachteilig angesehen, dass bei bekannten selbstbohrenden Schrauben die Schraubenspitze während des Schneidvorganges verläuft, sofern das Blech vor dem Eindrehen der Schraube nicht angekörnt wird. Ferner wird als nachteilig angesehen, dass eine mit einer bekannten selbstbohrenden Schraube erzeugte Schraubverbindung oft nicht die erforderliche Ausreißfestigkeit besitzt und die Schrauben vielfach nur bei geringen Blechstärken anwendbar sind. Dieses Dokument befasst sich daher mit der Aufgabe, eine selbstbohrende Schraube zu schaffen, die diese Nachteile vermeidet und vor allem auch ein Verlaufen der Schraube beim Eindrehen nahezu ausschließt sowie eine Schraubverbindung mit hoher Ausreißfestigkeit schafft. Diese selbstbohrende Schraube weist eine Spitze auf, die keinen Radius besitzt und gegenüber der Achse des Schaftes etwas seitlich versetzt angeordnet ist. Diese selbstbohrende Schraube soll deshalb den Vorteil haben, dass durch die Versetzung der Spitze gegenüber der Achse des Schraubenschaftes beim Eindrehen der Schraube in Blech ein Blechdurchzug (Kragenbildung) erhalten wird, so dass sich das Gewinde nicht nur in das Blech, sondern auch in diesen Blechdurchzug einschneidet, wodurch die Eingriffsfläche für die Schraube und damit auch die Ausreißfestigkeit wesentlich vergrößert werden. Durch die Spitze ohne Radius erfolgt der Bohrvorgang bei dieser selbstbohrenden Schraube schon bei der ersten Berührung der Spitze mit dem betreffenden Blech, so dass ein Verlaufen der Schraube mit Sicherheit ausgeschlossen werde. Diese bekannte selbstbohrende Schraube ist somit weder für den Einsatz bei Holz bestimmt noch hat sie die üblichen Eigenschaften einer Holzschraube.

Wenn eine übliche Holzschraube in Holz eingedreht wird, besteht stets die Gefahr, dass das Holz gespalten wird. Aus dem Dokument DE 20 2007 018 179 U1 ist eine Schraube bekannt, die zum Verhindern des Spaltens des Holzes eine sich von der Schraubenspitze aus über einen Teil der Länge des Schafts erstreckende Schabenut aufweist. Die Schabenut soll das sofortige Greifen des Gewindes in dem Holz begünstigen und das Spalten des Holzes verhindern. Mit einer solchen Schraube mit Schabenut lässt sich die Spaltneigung zwar wirksam verringern, jedoch ist das Herstellen einer solchen Schraube mit einer Schabenut sehr teuer.

Eine Holzschraube, welche der selbstbohrenden Schraube nach dem Oberbegriff des Patentanspruchs 1 sehr ähnlich ist, ist aus dem Dokument CH 50995 bekannt. Die Holzschraube ist so ausgebildet, dass Sie gesetzt werden kann, ohne dass ein Loch vorgebohrt wird. Die Holzschraube schafft sich beim Eindrehen in Holz das Loch selbst. Um dies zu erreichen, ist die Spitze der Schraube als ein schabendes bzw. fräsendes Werkzeug ausgebildet, dessen größte Abmessung senkrecht zur Schraubenachse gemessen gleich dem Schraubenschaftdurchmesser ist, welche Spitze beim Eindrehen der Schraube in Holz so feine Späne liefert, dass dieselben von den Schraubengängen zermahlt werden und sich in der Form von Holzmehl rings um das Gewinde und den Schraubenschaft herum verteilen können, dadurch zur Erhöhung der Haftbarkeit der Schraube im Holz beitragend. Die Holzschraube hat in einer Ausgestaltung eine Schaberspitze mit nur einer schräg gestellten Schärfe. Unter der Wirkung eines Gewindes von entsprechend geringer Ganghöhe wirkt die Schärfe nicht bohrend, d.h., liefert keine großen Späne, sondern das Holz wird unter Bildung feiner Späne bei der Umdrehung der Schraube abgeschabt. Die Schaberspitze kann nur eine waagrechte Schärfe oder nur eine schräg gestellte Schärfe haben oder aber mit mehreren Schärfen versehen sein, die in diesem Fall eine sogenannte Schaber- oder Fräserspitze bilden. Da eine Schaberspitze mit mehreren Schärfen unter Bildung feiner Späne rascher vordringen kann als eine Schaberspitze mit nur einer Schärfe, kann das Gewinde der Schraube eine größere Ganghöhe aufweisen als dasjenige der Schrauben mit nur einer Schräge.

Aufgabe der Erfindung ist es, eine selbstbohrende Schraube zu schaffen, die in Holz bei reduzierter Spaltwirkung einschraubbar ist und dabei einfacher herstellbar sein soll, wobei die üblichen Eigenschaften einer Holzschraube wie zum Beispiel ein hoher Auszugswert, ein niedriges Einformmoment und ein gutes Ansetzverhalten gewährleistet bleiben sollen und wobei das gebohrte Loch den Kerndurchmesser des Gewindes der Schraube aufweisen soll.

Diese Aufgabe ist erfindungsgemäß dadurch gelöst,
dass der Bohrteil eine eine Hauptschneide bildende zweite Schneide hat, die im Wesentlichen durch den Schnitt einer Spanfläche und einer Hauptfreifläche gebildet ist und sich von der Bohrspitze aus überwiegend parallel oder im Wesentlichen parallel zu der Längsachse der Schraube erstreckt,
dass die erste Schneide eine durch den Schnitt der Spanfläche und einer Nebenfreifläche gebildete Nebenschneide ist, die sich von der Bohrspitze aus schräg zu der Längsachse der Schraube über die Breite des Bohrteils erstreckt, und
dass der Bohrteil als eine Sichelspitze ausgebildet ist.

Die Schraube nach der Erfindung bohrt mit Hilfe einer Sichelspitze ein Loch, dessen Durchmesser dem Kerndurchmesser des Gewindes entspricht. Das gewährleistet den erwünschten hohen Auszugswert. Weil die Sichelspitze eine außen liegende Hauptschneide hat, die die Holzfasern durchtrennt, wird gegenüber dem Stand der Technik die Spaltwirkung erheblich reduziert, wenn nicht gänzlich beseitigt. Die Schraube nach der Erfindung benötigt ein niedriges Einformmoment, weil die Sichelspitze mit der Bohrspitze anfänglich im Mittelpunkt des herzustellenden Loches auf das Holze aufgesetzt wird und während des Bohrvorganges unter Bildung eines kleinen Loches, das im Durchmesser schnell zunimmt, nach außen wandert, um schließlich ein Loch mit dem Kerndurchmesser des Gewindes herzustellen. Die außen liegende, zu der Schraubenlängsachse zumindest im Wesentlichen parallele Hauptschneide, die bei keiner Schraube im Stand der Technik vorhanden ist, schneidet radial, d.h. schneidet das Material zum äußeren Rand des Loches hin weg, hingegen schneidet die Nebenschneide axial, d.h. schneidet das Material radial einwärts der Bohrspitze innerhalb des Loches weg und leitet dabei die Bohrspitze geführt nach außen. Die zum Erzielen des Bohrfortschritts erforderliche Druckkraft nimmt ab dem Beginn des Bohrvorganges laufend ab, bis der Durchmesser des Loches den Kerndurchmesser erreicht hat, was ebenfalls sehr zur Reduzierung der Spaltneigung beiträgt.

Die selbstbohrende Schraube nach der Erfindung hat aufgrund der radial außen angeordneten Bohrspitze, aufgrund der außen liegenden Hauptschneide und aufgrund der sich von der Bohrspitze aus schräg über die Breite des Bohrteils erstreckenden Nebenschneide das Bestreben, ein Loch mit dem Kerndurchmesser ihres Gewindes zu bohren. Die Schraube nach der Erfindung wird zwar mit der Bohrspitze in der Bohrlochachse auf das Holz aufgesetzt, mit zunehmend tiefer in das Holz eindringender Schraube nähern sich jedoch die Schraubenlängsachse und die Bohrlochachse zunehmend einer Position, in welcher sie zusammenfallen. Das ist eine für den Fachmann überraschende Wirkung angesichts des eingangs geschilderten Standes der Technik nach dem Dokument EP 1 430 227 B1, wo die Bohrspitze in der zu befestigenden Platte ihre zentrische Lage bis zum Erreichen des Unterbaus beibehält und so das Aufweiten des Durchgangsloches auf einen Durchmesser bewirkt, der wesentlich größer als der Kerndurchmesser des Gewindes der Schraube ist. Im Gegensatz dazu wandert die Bohrspitze der selbstbohrenden Schraube nach der Erfindung ab dem Beginn des Bohrvorganges aus ihrer zunächst mittigen Position um eine Strecke, die gleich dem halben Kerndurchmesser ist, nach außen, was zur Folge hat, dass trotz der außermittig angeordneten Bohrspitze ein Loch gebohrt wird, dessen Durchmesser gleich dem Kerndurchmesser ist. Bei der selbstbohrenden Schraube nach der Erfindung wird das, wie gesagt, dadurch erreicht, dass sich die außen liegende Hauptschneide und die schräge Nebenschneide jeweils von der Bohrspitze aus erstrecken.

Ein Bohrvorgang mit einer selbstbohrenden Schraube beginnt immer mit dem Ansetzen der Bohrspitze auf die Oberfläche des zu durchbohrenden Bauteils. Je niedriger die Kraft ist, die an dem Beginn des Bohrvorganges benötigt wird, und je schräger die Schraube ohne Abrutschen gesetzt werden kann, desto besser ist das Ansetzverhalten der Schraube. Die selbstbohrende Schraube nach der Erfindung hat ein sehr gutes Ansetzverhalten, gewährleistet eine hohe Auszugskraft und ein niedriges Einformmoment und ist bei geringer Spaltkraft kostengünstig herstellbar.

Vorteilhafte Ausgestaltungen der Erfindung bilden die Gegenstände der abhängigen Ansprüche.

In einer Ausgestaltung der selbstbohrenden Schraube nach der Erfindung ist die Bohrspitze durch den Schnitt der Spanfläche, der Nebenfreifläche und der Hauptfreifläche gebildet. Da sich die Hauptschneide und die Nebenscheide von der Bohrspitze aus erstrecken, bedeutet diese Ausgestaltung, dass alle Schneiden an der Sichelspitze der selbstbohrenden Schraube nach der Erfindung an ein und dieselbe Fläche angrenzen, nämlich an die Spanfläche, was die Herstellung der Schneiden erleichtert.

In einer weiteren Ausgestaltung der selbstbohrenden Schraube nach der Erfindung bildet die Nebenschneide einen Winkel von bis zu 40 Grad mit der Längsachse der Schraube. Das ergibt eine Sichelspitze mit definiertem Ansetzverhalten und einer besonders effektiven Wirkung von Haupt- und Nebenscheide.

In einer weiteren Ausgestaltung der selbstbohrenden Schrauben nach der Erfindung hat die Mantelfläche des Bohrteils einen Durchmesser, der gleich oder im Wesentlichen gleich dem Kerndurchmesser ist. Der Bohrteil geht in diesem Fall in den Schaft der Schraube über, so dass für das Einschrauben der Schraube in das mit dem Kerndurchmesser versehene Loch nur eine geringe Kraft aufzuwenden ist.

In einer weiteren Ausgestaltung der selbstbohrenden Schraube nach der Erfindung ist die Hauptfreifläche ein Teil der Mantelfläche des Bohrteils. In diesem Fall sind keine zusätzlichen Fertigungsschritte für die Hauptfreifläche erforderlich, denn die Mantelfläche, die vorzugsweise zylindrisch ist, ist ohnehin vorhanden.

In einer weiteren Ausgestaltung der selbstbohrenden Schraube nach der Erfindung ist die Sichelspitze zu der Längsachse der Schraube im Wesentlichen parallel. Das kann für den jeweiligen Einsatzzweck in Abhängigkeit von der Art des zu durchbohrenden Holzes die zweckmäßigste Ausgestaltung sein.

In einer weiteren Ausgestaltung der selbstbohrenden Schraube nach der Erfindung nimmt die Sichelspitze rechtwinklig zur Spanfläche den halben Kerndurchmesser ein. Das ermöglicht bei jeweils großer Länge von Haupt- und Nebenschneide einen ausreichenden Freiraum im Bereich der Bohrspitze zur Abfuhr des Bohrkleins.

In einer weiteren Ausgestaltung der selbstbohrenden Schraube nach der Erfindung enthält die Spanfläche die Längsachse der Schraube. In diesem Fall kann die Sichelspitze rechtwinkelig zur Spanfläche bis zur Hälfte des Kerndurchmessers einnehmen.

In einer weiteren Ausgestaltung der selbstbohrenden Schraube nach der Erfindung bildet die Spanfläche einen Winkel von bis zu 30 Grad mit der Längsachse der Schraube. Dadurch kann eine der Art des zu durchbohrenden Holzes entsprechende Bohrleistung gewählt werden.

In einer weiteren Ausgestaltung der selbstbohrenden Schraube nach der Erfindung ist die Hauptschneide in einem an die Bohrspitze anschließenden Bereich um einen kleinen Winkel von bis zu 10 Grad zu der Längsachse der Schraube hin gegen eine Mantellinie der Mantelfläche geneigt. Diese Ausgestaltung kann zu einer weiteren Verbesserung des Bohrvorganges je nach Art des zu durchbohrenden Holzes genutzt werden.

In einer weiteren Ausgestaltung der selbstbohrenden Schraube nach der Erfindung ist die Spanfläche in Längsrichtung der Schraube und anschließend an die Bohrspitze parallel oder im Wesentlichen parallel zu der Schraubenlängsachse ausgerichtet. Das kann zu einer weiteren Verbesserung des Bohrvorganges gegenüber der vorhergehenden Ausgestaltung je nach Art des Holzes genutzt werden.

In einer weiteren Ausgestaltung der selbstbohrenden Schraube nach der Erfindung nimmt die Sichelspitze rechtwinkelig zur Spanfläche weniger als den halben Kerndurchmesser ein. Dadurch wird die verfügbare Länge von Haupt- und Nebenschneide zwar verkleinert, jedoch der Freiraum für die Bohrkleinabfuhr vergrößert.

In einer weiteren Ausgestaltung der selbstbohrenden Schraube nach der Erfindung hat der Bohrteil in einem an die Bohrspitze anschließenden Bereich einen Außendurchmesser, der um eine kleine Strecke kleiner als der Kerndurchmesser des Schaftes ist. Auch durch diese Ausgestaltung kann je nach Art des zu durchbohrenden Holzes zu einer Verbesserung des Bohrvorganges genutzt werden.

In einer weiteren Ausgestaltung der selbstbohrenden Schraube nach der Erfindung nimmt die Sichelspitze rechtwinkelig zu der Spanfläche mehr als den halben Kerndurchmesser ein. Das ergibt zwar weniger Freiraum für die Abfuhr des Bohrkleins, ermöglicht aber eine größere Länge von Haupt- und Nebenscheide.

In einer weiteren Ausgestaltung der selbstbohrenden Schraube nach der Erfindung ist die Spanfläche von einer Mantellinie des Bohrteils aus nach innen ausgespart ist, so dass die Hauptschneide nur auf einem Teil ihrer Länge zu der Längsachse der Schraube parallel oder im Wesentlichen parallel ist. Auch diese Ausgestaltung kann je nach Art der herzustellenden Bohrung und je nach Art des zu durchbohrenden Holzes zu einer Verbesserung des Bohrvorganges genutzt werden.

In einer weiteren Ausgestaltung der selbstbohrenden Schraube nach der Erfindung erstreckt sich die Hauptschneide in ihrem an die Bohrspitze unmittelbar anschließenden Bereich schräg zu der Längsachse der Schraube und geht an einer Ecke in einen Bereich über, in welchem sie sich parallel oder im Wesentlichen parallel zu der Längsachse der Schraube erstreckt. Diese Ausgestaltung bringt eine zusätzliche Schneide im Bereich der Hauptschneide ins Spiel, die sich auf den Bohrvorgang vorteilhaft auswirken kann.

In einer weiteren Ausgestaltung der selbstbohrenden Schraube nach der Erfindung sind an dem Übergang zu dem Schaft an der Spanfläche Radien, Phasen oder Freistellungen gebildet. Das erleichtert die Abfuhr des Bohrkleins und die Herstellung der Sichelspitze und verhindert das Auftreten von Spannungsspitzen an dem Übergang zwischen Schaft und Bohrteil.

In einer weiteren Ausgestaltung der selbstbohrenden Schraube nach der Erfindung beginnt das Gewinde auf einem sich entgegengesetzt zu der Bohrspitze an den Bohrteil anschließenden Teil des Schaftes. Dadurch wird die Spaltwirkung weiter reduziert.

Ausführungsbeispiele der Erfindung werden im Folgenden unter Bezugnahme auf die Zeichnungen näher beschrieben. Es zeigen
- Fig. 1a-1d: ein erstes Ausführungsbeispiel einer selbstbohrenden Schraube nach der Erfindung mit einer zu der Schraubenlängsachse parallelen Sichelspitze;
- Fig. 2a-2d: ein zweites Ausführungsbeispiel der selbstbohrenden Schraube nach der Erfindung, bei dem die Sichelspitze gegen die Schraubenlängsachse geneigt ist;
- Fig. 3a-3d: ein drittes Ausführungsbeispiel der selbstbohrenden Schraube nach der Erfindung, bei dem die Sichelspitze schlanker als bei dem ersten und dem zweiten Ausführungsbeispiel ist;
- Fig. 4a-4d: ein viertes Ausführungsbeispiel der selbstbohrenden Schraube nach der Erfindung, bei dem die Sichelspitze weniger schlank als bei dem dritten Ausführungsbeispiel ist;
- Fig. 5a-5d: ein fünftes Ausführungsbeispiel der selbstbohrenden Schraube nach der Erfindung, bei dem die Sichelspitze mit ihrer Spanfläche gegen die Längsachse der Schraube geneigt ist;
- Fig. 6a-6d: ein sechstes Ausführungsbeispiel der selbstbohrenden Schraube nach der Erfindung, bei dem die Sichelspitze flacher als bei den vorhergehenden Ausführungsbeispielen ausgebildet ist;
- Fig. 7a-7d: ein siebtes Ausführungsbeispiel der selbstbohrenden Schraube nach der Erfindung, bei dem die Sichelspitze leicht abgestumpft ist; und
- Fig. 8a-8d: Darstellungen zur Erläuterung des Bohrvorganges am Beispiel der selbstbohrenden Schraube nach den Fig. 1a-1d.

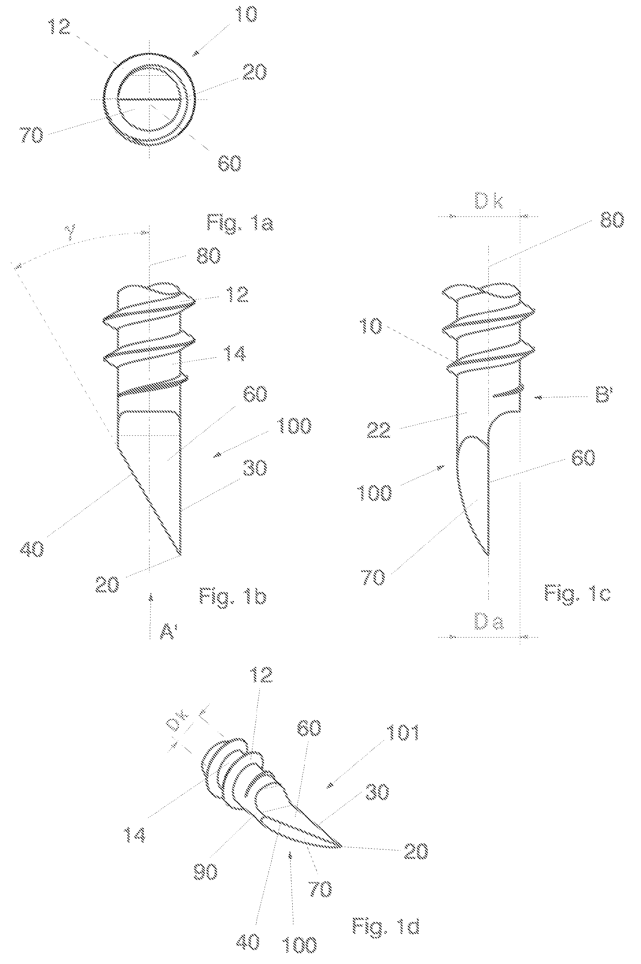

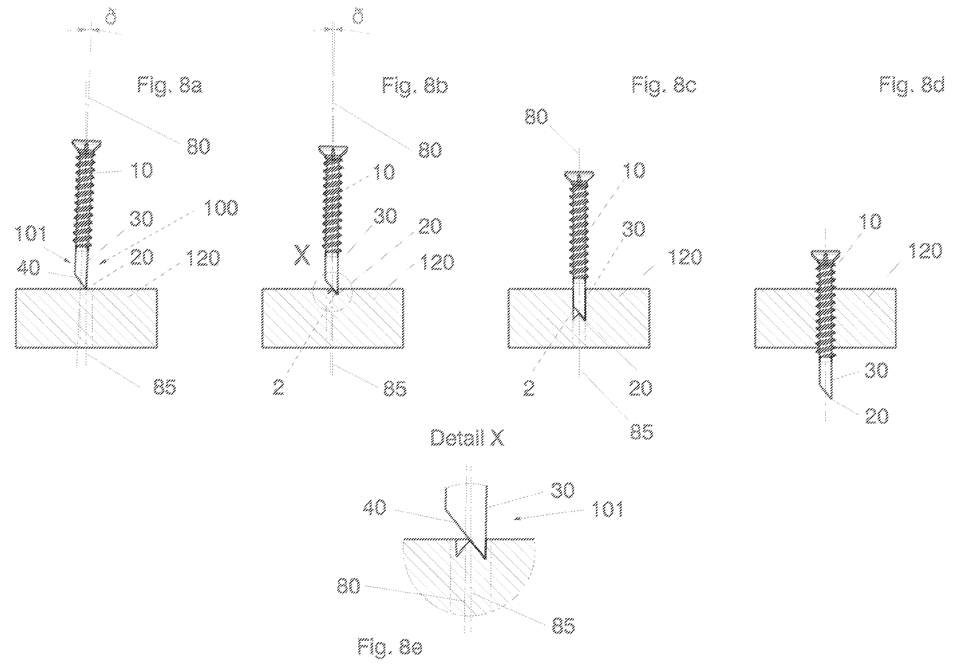

Fig. 1, bestehend aus den Figuren 1 a-1d, zeigt ein erstes Ausführungsbeispiel einer selbstbohrenden Schraube nach der Erfindung, die in Fig. 1 und in allen weiteren Figuren jeweils insgesamt mit 10 bezeichnet ist. Die Schraube 10 besteht aus Metall. Der Kopf der Schraube 10 ist lediglich in Fig. 8 sichtbar und dort mit 11 bezeichnet. In den Fig. 1 bis 7 ist jeweils nur das zu dem Kopf 11 entgegengesetzte Ende der Schraube 10 dargestellt. An dem dargestellten Ende ist die Schraube 10 mit einem Bohrteil 100 versehen, der bei jedem der dargestellten Ausführungsbeispiele der Erfindung als eine Sichelspitze ausgebildet ist. In dem ersten Ausführungsbeispiel, das in Fig. 1 gezeigt ist, ist die Sichelspitze insgesamt mit 101 bezeichnet. Die Schraube 10 hat einen mit einem Gewinde 12 und mit einem Kerndurchmesser Dₖ versehenen Schaft 14.

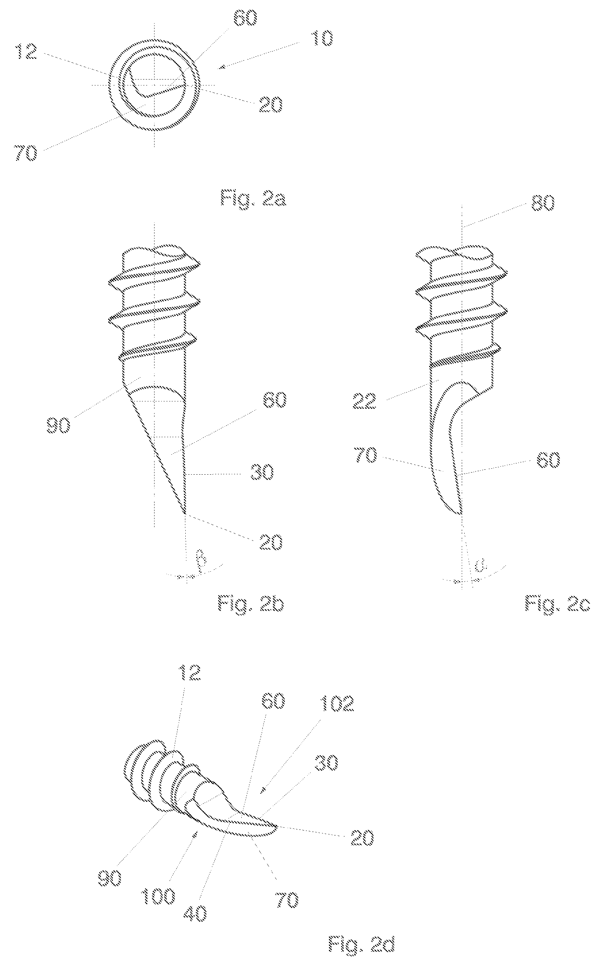

Fig. 1 zeigt in Fig. 1a die selbstbohrende Schraube 10 nach der Erfindung in einer axialen Draufsicht auf den Bohrteil 100 in Richtung eines Pfeils A' in Fig. 1b, in Fig. 1b den Bohrteil 100 und einen benachbarten Teil des Schaftes 14der Schraube 10 in einer Seitenansicht in Richtung eines Pfeils B' in Fig. 1c, in Fig. 1c den Bohrteil 100 und den benachbarten Schaftteil in einer gegenüber der Darstellung in Fig. 1b um 90° gedrehten Ansicht und in Fig. 1d den Bohrteil 100 und den benachbarten Schaftteil in einer perspektivischen Darstellung. Die weiteren Ausführungsbeispiele der selbstbohrenden Schraube nach der Erfindung sind in den Figuren 2-7 jeweils in gleichen Ansichten gezeigt.

Der Bohrteil 100 hat eine Mantelfläche 22, die in dem hier dargestellten Ausführungsbeispiel eine kreiszylindrische Mantelfläche ist. Die Schraube 10 hat eine Längsachse 80. Ihre Bohrspitze 20 ist außermittig angeordnet. Die Sichelspitze 101 des Bohrteils 100 der Schraube 10 ist mit einer radial außen angeordneten Hauptschneide 30 versehen, die durch den Schnitt einer Spanfläche 60 und einer Hauptfreifläche 90 gebildet ist. Die Hauptschneide 30 erstreckt sich von der Bohrspitze 20 aus in dem Ausführungsbeispiel nach Fig. 1 parallel zu der Längsachse 80. Die Spanfläche 60 bildet mit einer Nebenfreifläche 70, die in den Figuren 1c und 1d gezeigt ist, eine Nebenschneide 40. Die Nebenschneide 40 erstreckt sich von der Bohrspitze 20 aus schräg zu der Längsachse 80 über die Breite des Bohrteils 100, was in Fig. 1b zu erkennen ist. Die Bohrspitze 20 liegt auf einem gedachten Kreis um die Längsachse 80 der Schraube 10. Der Durchmesser dieses Kreises ist in dem Ausführungsbeispiel nach Fig. 1 gleich dem Kerndurchmesser Dₖ. Die Bohrspitze 20 ist durch den Schnitt der Spanfläche 60, der Nebenfreifläche 70 und der Hauptfreifläche 90 gebildet, so dass die Hauptschneide 30 und die Nebenschneide 40 an ein und dieselbe Fläche angrenzen, nämlich an die Spanfläche 60.

Die Nebenschneide 70 bildet gemäß der Darstellung in Fig. 1b einen Winkel γ mit der Längsachse 80 der Schraube 10, der bis zu 40 Grad betragen kann. Die Mantelfläche 22 des Bohrteils 100 hat gemäß der Darstellung in Fig. 1c einen Durchmesser Dₐ, der in dem Ausführungsbeispiel nach Fig. 1 gleich dem Kerndurchmesser Dₖ ist. Die Hauptfreifläche 90 ist ein Teil der Mantelfläche 22 des Bohrteils 100 und ist somit hier eine zylindrische Fläche. Die Sichelspitze 101 ist zu der Längsachse 80 der Schraube 10 im Wesentlichen parallel und nimmt gemäß der Darstellung in Fig. 1c rechtwinkelig zur Spanfläche 60 den halben Kerndurchmesser Dₖ ein, wobei in dem Ausführungsbeispiel nach Fig. 1 die Spanfläche 60 die Längsachse 80 der Schraube 10 enthält.

Die Schraube 10 nach der Erfindung kann durch Warm- oder Kaltumformung und/oder spanabhebende Bearbeitung eines zylindrischen Ausgangsmaterials oder eines Schraubenrohlings hergestellt werden. Die Art der Herstellung ist für das Verständnis der Erfindung nicht wichtig.

Die vorstehend beschriebene Ausbildung der Schraube 10 dient dem Zweck, in einem plattenförmigen Werkstück 120, das in Fig. 8 angedeutet ist, ein Durchgangsloch herzustellen, das den mit dem Gewinde 12 versehenen Schaft 14 ohne Spiel aufnimmt und in das das Gewinde 12 des Schaftes 14 ein Gegengewinde schneidet. Dabei soll durch die besondere Ausbildung der Sichelspitze und durch deren außermittige Anordnung die Spaltwirkung, die eine übliche Holzschraube beim Einschrauben in Holz üblicherweise erzeugt, auf ein vernachlässigbares Ausmaß verringert werden. Zu diesem Zweck ist die Sichelspitze 101 nicht nur außermittig angeordnet, sondern hat zusätzlich auch die zu der Längsachse 80 der Schraube 10 parallele oder im wesentlichen parallele Hauptschneide 30 sowie die sich schräg zu der Längsachse 80 über die Breite des Bohrteils 100 erstreckende Nebenschneide 40. Die Wirkungsweise der außermittig angeordneten Sichelspitze 101 und der an dieser ausgebildeten Haupt- und Nebenschneide bei dem Setzen der selbstbohrenden Schraube wird weiter unten unter Bezugnahme auf Fig. 8 erläutert.

Die Ausführungsbeispiele nach den Figuren 2-7 werden nur insoweit erläutert, als sie sich von dem ersten Ausführungsbeispiel nach Fig. 1 unterscheiden.

Fig. 2 oder Fig. 2a-2d zeigt ein zweites Ausführungsbeispiel der selbstbohrenden Schraube 10 nach der Erfindung, bei dem eine Sichelspitze 102 gegen die Längsachse 80 der Schraube 10 geneigt ist, wie es in den Figuren 2c und 2d zu erkennen ist. In diesem Ausführungsbeispiel der Schraube 10 bildet die Spanfläche 60 einen Winkel α von bis zu 30 Grad mit der Längsachse 80 der Schraube. In der Darstellung in Fig. 2c nimmt die Sichelspitze 102 rechtwinkelig zur Längsachse 80 den halben Kerndurchmesser Dₖ ein. Im Unterschied zu dem Ausführungsbeispiel nach Fig. 1 enthält die Spanfläche 60 hier aber nicht die Längsachse 80 der Schraube.

Gemäß der Darstellung in Fig. 2b ist die Hauptschneide 30 in einem an die Bohrspitze 20 anschließenden Bereich um einen kleinen Winkel β zu der Längsachse 80 der Schraube hin gegen eine Mantellinie der Mantelfläche 22 geneigt. Der Winkel β kann bis zu 10 Grad betragen. Ein bevorzugter Wert für den Winkel β ist 5 Grad. Für den Winkel β wird ganz allgemein ein kleiner Wert gewählt, so dass die Hauptschneide 30 im Wesentlichen noch parallel zur Längsachse 80 bleibt. Ein bevorzugter Wert für den Winkel β ist deshalb 5 Grad. Die Hauptschneide 30 könnte auch bei dem Ausführungsbeispiel nach Fig. 1 um den Winkel β zu der Längsachse 80 der Schraube 10 hin gegen eine Mantellinie der Mantelfläche 22 geneigt sein. Es ist also nicht so, dass bei Einsatz einer um den Winkel α geneigten Spanfläche 60 wie in Fig. 2c notwendigerweise auch die Hauptschneide 30 einen Winkel β aufweisen muss, und umgekehrt. In dem Ausführungsbeispiel nach Fig. 2 könnte die Sichelspitze 102 also den Winkel α und/oder den Winkel β aufweisen, was entsprechend auch für das Ausführungsbeispiel nach Fig. 1 gilt.

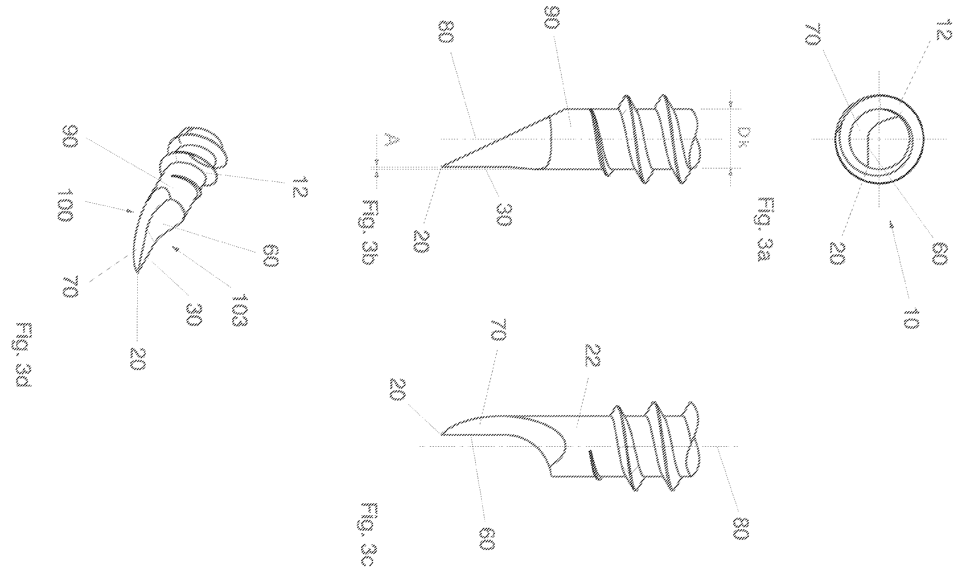

Fig. 3 oder Fig. 3a-3d zeigt ein drittes Ausführungsbeispiel der selbstbohrenden Schraube 10 nach der Erfindung, bei dem eine Sichelspitze 103 schlanker als bei den Ausführungsbeispielen nach den Fig. 1 und 2 ist. Die Spanfläche 60 ist nämlich in Längsrichtung der Schraube 10 und anschließend an die Bohrspitze 20 parallel oder im Wesentlichen parallel zu der Längsachse 80 ausgerichtet, wie es in Fig. 3 zu erkennen ist. Dabei nimmt die Sichelspitze 103 rechtwinkelig zur Spanfläche 60 weniger als den Kerndurchmesser Dₖ ein, was ebenfalls in Fig. 3c zu erkennen ist. Gemäß Fig. 3b hat der Bohrteil 100 in einem an die Bohrspitze 20 anschließenden Bereich einen Außendurchmesser, der um eine kleine Strecke A kleiner als der Kerndurchmesser Dₖ des Schaftes 14 ist.

Die obigen Ausführungen zu dem Einsatz des Winkels β gemäß der Darstellung in Fig. 2b gelten entsprechend auch für den Einsatz der Strecke A gemäß Fig. 3b. Es könnte also auch bei der Ausführungsform der Schraube 10 nach Fig. 3 der Bohrteil 100 statt der Verkleinerung um die Strecke A an der Hauptschneide 30 den Winkel β aufweisen. Anders ausgedrückt, auch bei den Ausführungsformen der Schraube 10 nach den Figuren 1 und 2 könnte die Hauptschneide 30 statt unter dem Winkel β geneigt zu sein, um die Strecke A nach innen zur Längsachse 80 hin versetzt sein.

Auch könnte in der Ausführungsform nach Fig. 3 die Spanfläche 60 wie bei der Ausführungsform nach Fig. 2 gegen die Längsachse 80 geneigt sein, statt gemäß Fig. 3c zu der Längsachse 80 parallel oder im Wesentlichen parallel zu sein.

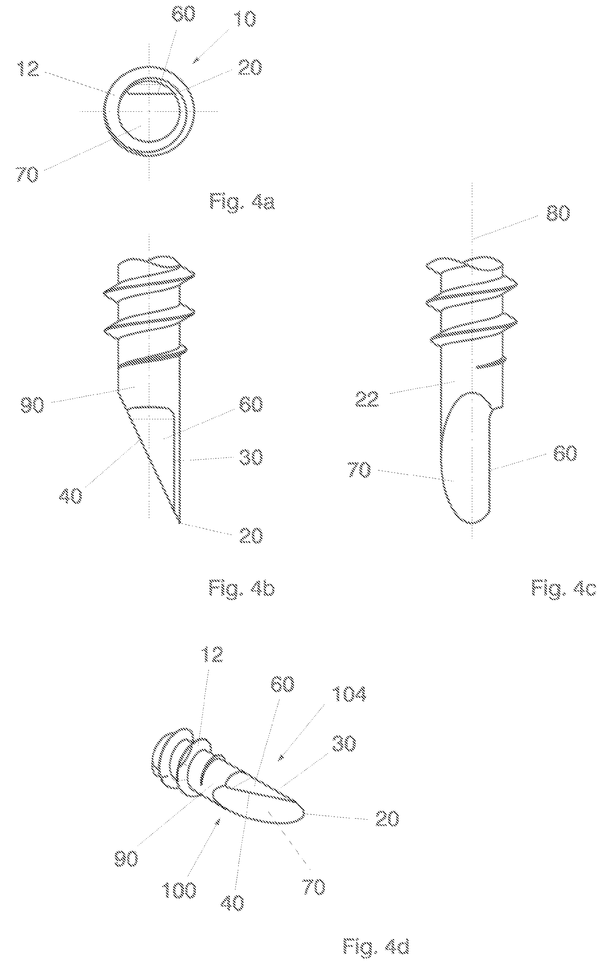

Fig. 4 oder Fig. 1-4d zeigt ein viertes Ausführungsbeispiel der selbstbohrenden Schraube 10 nach der Erfindung, bei dem eine Sichelspitze 104 weniger schlank als bei dem Ausführungsbeispiel nach Fig. 3 ist. Die Sichelspitze 104 nimmt rechtwinkelig zu der Spanfläche 60 mehr als den halben Kerndurchmesser Dₖ ein, wie es Fig. 4c erkennen lässt. Dabei ist die Spanfläche 60 in Längsrichtung der Schraube und anschließend an die Bohrspitze 20 zu der Längsachse 80 der Schraube 10 parallel oder im wesentlichen parallel. Die Spanfläche 60 könnte aber auch in der Ausführungsform nach Fig. 4 gegen die Längsachse 80 um einen Winkel α wie bei der Ausführungsform nach Fig. 2 geneigt sein. Ebenso könnte die Schraube 10 in der Ausführungsform nach Fig. 4 an der Hauptschneide 30 mit einem Winkel β wie in Fig. 2 oder mit einem um A gegenüber dem Kerndurchmesser Dₖ verkleinerten Durchmesser wie in der Ausführungsform nach Fig. 3 versehen sein.

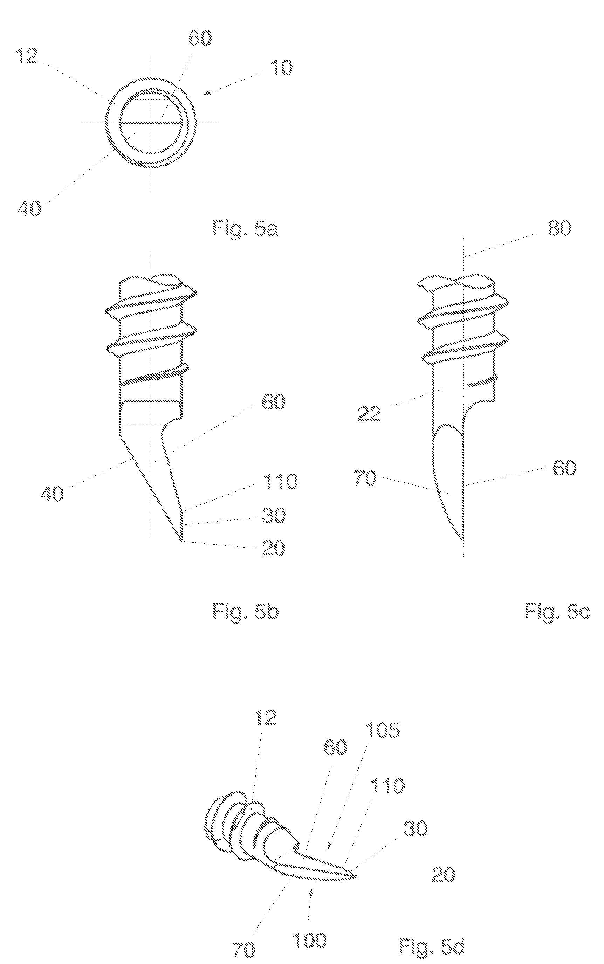

Fig. 5 zeigt ein fünftes Ausführungsbeispiel der selbstbohrenden Schraube 10 nach der Erfindung, bei dem eine Sichelspitze 105 gegen die Längsachse 80 der Schraube 10 geneigt ist, wie es in den Figuren 5b und 5d zu erkennen ist. Dabei ist die Spanfläche 60 von einer Mantellinie des Bohrteils 100 aus nach innen ausgespart, wie es in Fig. 5b zu erkennen ist, so dass die Hauptschneide 30 nur auf einem Teil ihrer Länge zu der Längsachse 80 der Schraube 10 parallel oder im wesentlichen parallel ist, also nicht durchgehend als eine Gerade ausgebildet ist. Auch in dem Ausführungsbeispiel nach Fig. 5 hat die Mantelfläche 22 des Bohrteils 100 einen Durchmesser Dₐ, der gleich oder im Wesentlichen gleich dem Kerndurchmesser Dₖ ist.

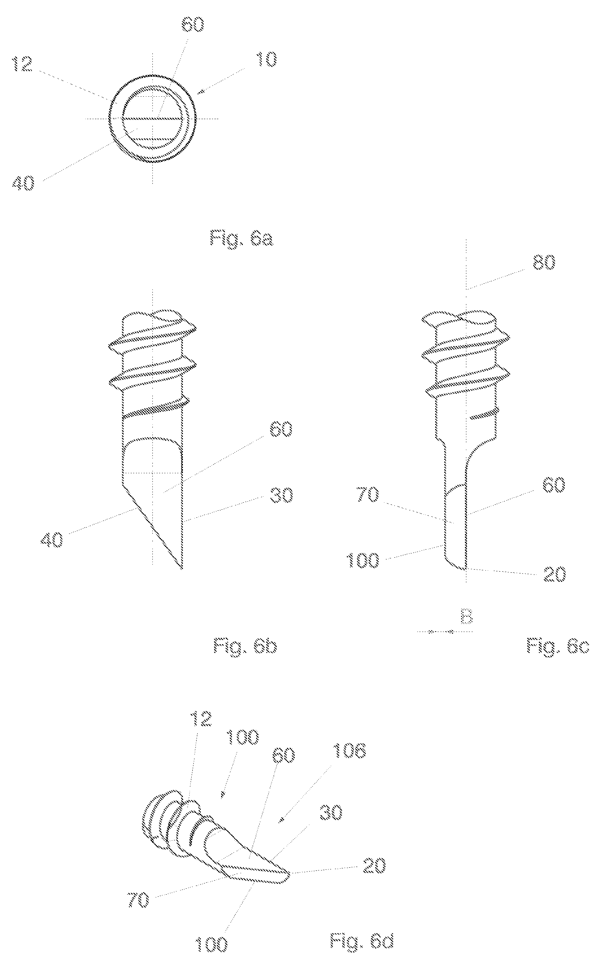

Fig. 6 oder Fig. 6a-6d zeigt ein sechstes Ausführungsbeispiel der selbstbohrenden Schraube 10 nach der Erfindung, bei dem eine Sichelspitze 106 flacher als bei den vorhergehenden Ausführungsbeispielen ausgebildet ist. Die Spanfläche 60 enthält zwar die Längsachse 80 der Schraube 10, rechtwinkelig zu der Spanfläche 60 nimmt die Sichelspitze 106 aber weniger als den halben Kerndurchmesser Dₖ ein, wie es in Fig. 6c zu erkennen ist. Es ergibt sich dadurch eine mehr spatenförmige Ausbildung der Sichelspitze 106.

Die Spanfläche 60 ist in Längsrichtung der Schraube 10 und anschließend an die Bohrspitze 20 parallel oder im Wesentlichen parallel zu der Längsachse 80 der Schraube 10 ausgerichtet. Auch die Ausführungsform der Schraube 10 nach Fig. 6 könnte den Winkel β nach Fig. 2 oder die Durchmesserverkleinerung um A nach Fig. 3 aufweisen.

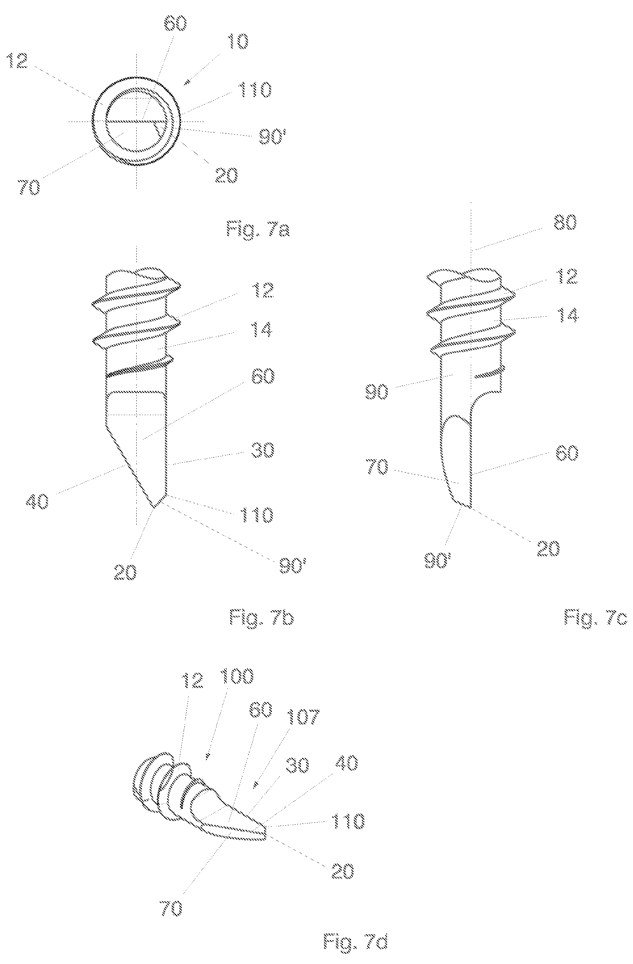

Fig. 7 oder Fig. 7a-7d zeigt ein siebtes Ausführungsbeispiel der selbstbohrenden Schraube 10 nach der Erfindung, bei dem eine Sichelspitze 107 leicht abgestumpft ist. Die Hauptschneide 30 erstreckt sich nämlich in ihrem an die Bohrspitze 20 unmittelbar anschließenden Bereich schräg zu der Längsachse 80 der Schraube 10 und geht an einer Ecke 110 in einen Bereich über, in welchem sie sich parallel oder im Wesentlichen parallel zu der Längsachse 80 der Schraube 10 erstreckt, wie es in Fig. 7b zu erkennen ist. Die Hauptschneide 30 ist in ihrem an die Bohrspitze 20 unmittelbar anschließenden Bereich durch den Schnitt der Spanfläche 60 und eines abgewinkelten Teils 90' der Hauptfreifläche 90 gebildet. Abgesehen von der Abstumpfung der Sichelspitze 107 stimmt die Ausführungsform nach Fig. 7 mit der nach Fig. 1 im wesentlichen überein, so dass die Ausführungen zu Fig. 1 auch für die Ausführungsform nach Fig. 7 gelten.

Allen Ausführungsbeispielen ist gemeinsam, dass an dem Übergang zu dem Schaft 14 der Spanfläche 60 Radien, Fasen oder Freistellungen gebildet sind. Außerdem beginnt bei jedem Ausführungsbeispiel das Gewinde 12 auf einem sich entgegengesetzt zu der Bohrspitze 20 an dem Bohrteil 100 anschließenden Teil des Schaftes 14, wie es in den Figuren ohne weiteres zu erkennen ist.

Unter Bezugnahme auf Fig. 8 oder Fig. 8a-8e wird nun ein Bohrvorgang am Beispiel einer dem Ausführungsbeispiel nach Fig. 1 entsprechenden Schraube 10 nach der Erfindung beschrieben. Die Figuren 8a-8d zeigen verschiedene Phasen des Bohrvorganges. Fig. 8e zeigt in größerem Maßstab ein Detail X der Darstellung nach Fig. 8b.

In Fig. 8a ist der Anfang des Bohrvorganges gezeigt. Die selbstbohrende Schraube 10 ist mit ihrer Sichelspitze 101 auf das Werkstück 120 aufgesetzt worden, und zwar an einer Stelle, die dem Mittelpunkt des Querschnittes einer in dem Werkstück 120 herzustellenden Durchgangsbohrung entspricht. Die Längsachse 80 der Schraube 10 ist um einen Winkel δ gegen eine Längsachse 85 der herzustellenden Durchgangsbohrung geneigt, wie es in Fig. 8a zu erkennen ist. Zum Setzen der Schraube 10 kann jedes beliebige Eindrehwerkzeug verwendet werden, das in dem Aufnahmeteil für den Kopf 11 ausreichend Spiel hat, um die in Fig. 8a gezeigte schräge Anordnung der Schraube 10 zu erlauben. Das Eindrehwerkzeug braucht sich lediglich um seine eigene Achse zu drehen. Eine irgendwie geartete Hin- und Herbewegung oder eine Kreisbewegung sollte der Aufnahmeteil des Werkzeuges nicht ausführen. Unmittelbar ab dem Beginn des Bohrvorganges bewegt sich die Bohrspitze 20 radial nach außen in Richtung zum Umfang der herzustellenden Durchgangsbohrung. Der Winkel δ wird dabei zunehmend kleiner, wie es in der Darstellung in Fig. 8b und in der Einzelheit nach Fig. 8e zu erkennen ist. Wenn es sich bei dem Werkstück 120 um ein Werkstück aus Holz handelt, werden die Fasern des Holzes durch die sich radial nach außen bewegende Hauptschneide 30 durchgetrennt. Entsprechend werden die Holzfasern in axialer Richtung durch die sich axial einwärts bewegende Nebenschneide 40 durchgetrennt. Die Tendenz, sich während des Bohrvorganges radial nach außen zu bewegen, erhält die Hauptschneide 30 durch die mit der schrägen Nebenschneide 40 axial gegen das Werkstück 120 drückende Schraube 10. Diese Tendenz verschwindet, sobald sich die Schraube 10 um die Hälfte des Kerndurchmessers Dₖ nach außen bewegt hat. Ab diesem Augenblick bohrt die Schraube 10 ein Loch mit dem Durchmesser Dₖ, wie es in Fig. 8c zu erkennen ist. Anschließend schneidet die Schraube 10 mit Ihrem Gewinde 12 ein Gegengewinde in das Werkstück 120, wie es in Fig. 8d gezeigt ist. Ab dem Zeitpunkt, in welchem sich die Hauptschneide 30 um den halben Kerndurchmesser Dₖ nach außen bewegt hat, ist der Winkel δ zwischen der Längsachse 80 der Schraube 10 und der Längsachse 85 der durch die Schraube 10 hergestellten Bohrung gleich null.

### Bezugszeichenliste

- 10: Schraube
- 11: Kopf
- 12: Gewinde
- 14: Schaft
- 20: Bohrspitze
- 22: Mantelfläche
- 30: Hauptschneide
- 40: Nebenschneide
- 60: Spanfläche
- 70: Nebenfreifläche
- 80: Längsachse
- 90: Hauptfreifläche
- 100: Bohrteil
- 101: Sichelspitze
- 102: Sichelspitze
- 103: Sichelspitze
- 104: Sichelspitze
- 105: Sichelspitze
- 106: Sichelspitze
- 107: Sichelspitze
- 110: Ecke

- A: Strecke
- A': Pfeil
- B': Pfeil
- Dₖ: Kerndurchmesser
- γ: Winkel
- β: Winkel
- α: Winkel

## Patentansprüche

1. Selbstbohrende Schraube (10) mit einem Bohrteil (100) und einem mit Gewinde (12) und einem Kerndurchmesser (Dₖ) versehenen Schaft (14), wobei der Bohrteil (100) eine Mantelfläche (22) und eine in Bezug auf eine Längsachse (80) der Schraube (10) außermittig angeordnete Bohrspitze (20) hat und wenigstens eine erste Schneide aufweist, die in Bezug auf die Längsachse (80) der Schraube (10) schräg verläuft, und wobei die Bohrspitze (20) auf einem gedachten Kreis um die Längsachse (80) der Schraube (10) liegt, dessen Durchmesser gleich oder im Wesentlichen gleich dem Kerndurchmesser (Dₖ) ist,
**dadurch gekennzeichnet, dass** der Bohrteil (100) eine eine Hauptschneide (30) bildende zweite Schneide hat, die im Wesentlichen durch den Schnitt einer Spanfläche (60) und einer Hauptfreifläche (90) gebildet ist und sich von der Bohrspitze (20) aus überwiegend parallel oder im Wesentlichen parallel zu der Längsachse (80) der Schraube (10) erstreckt,
dass die erste Schneide eine durch den Schnitt der Spanfläche (60) und einer Nebenfreifläche (70) gebildete Nebenschneide (40) ist, die sich von der Bohrspitze (20) aus schräg zu der Längsachse (80) der Schraube (10) über die Breite des Bohrteils (100) erstreckt, und
dass der Bohrteil (100) als eine Sichelspitze (101-107) ausgebildet ist.

2. Selbstbohrende Schraube nach Anspruch 1, **dadurch gekennzeichnet, dass** die Bohrspitze (20) durch den Schnitt der Spanfläche (60), der Nebenfreifläche (70) und der Hauptfreifläche (90) gebildet ist.

3. Selbstbohrende Schraube nach einem der vorhergehenden Ansprüche, **dadurch gekennzeichnet, dass** die Nebenschneide (40) einen Winkel (γ) von bis zu 40 Grad mit der Längsachse (80) der Schraube (10) bildet.

4. Selbstbohrende Schraube nach einem der vorhergehenden Ansprüche, **dadurch gekennzeichnet, dass** die Mantelfläche (22) des Bohrteils (100) einen Durchmesser (Dₐ) hat, der gleich oder im Wesentlichen gleich dem Kerndurchmesser (Dₖ) ist.

5. Selbstbohrende Schraube nach einem der vorhergehenden Ansprüche, **dadurch gekennzeichnet, dass** die Hauptfreifläche (90) ein Teil der Mantelfläche (22) des Bohrteils (100) ist.

6. Selbstbohrende Schraube nach einem der vorhergehenden Ansprüche, **dadurch gekennzeichnet, dass** die Sichelspitze (101-107) zu der Längsachse (80) der Schraube (10) im Wesentlichen parallel ist.

7. Selbstbohrende Schraube nach Anspruch 6, **dadurch gekennzeichnet, dass** die Sichelspitze (102, 102, 105, 107) rechtwinkelig zur Spanfläche (60) den halben Kerndurchmesser (Dₖ) einnimmt.

8. Selbstbohrende Schraube nach einem der vorhergehenden Ansprüche, **dadurch gekennzeichnet, dass** die Spanfläche (60) die Längsachse (80) der Schraube (10) enthält.

9. Selbstbohrende Schraube nach einem der Ansprüche 1 bis 7, **dadurch gekennzeichnet, dass** die Spanfläche (60) einen Winkel (α) von bis zu 30 Grad mit der Längsachse (80) der Schraube (10) bildet.

10. Selbstbohrende Schraube nach Anspruch 9, **dadurch gekennzeichnet, dass** die Hauptschneide (30) in einem an die Bohrspitze (20) anschließenden Bereich um einen kleinen Winkel (β) von bis zu 10 Grad zu der Längsachse (80) der Schraube (10) hin gegen eine Mantellinie der Mantelfläche (22) geneigt ist.

11. Selbstbohrende Schraube nach einem der Ansprüche 1 bis 6, **dadurch gekennzeichnet, dass** die Spanfläche (60) in Längsrichtung der Schraube (10) und anschließend an die Bohrspitze (20) parallel oder im Wesentlichen parallel zu der Längsachse (80) der Schraube (10) ausgerichtet ist.

12. Selbstbohrende Schraube nach einem der Ansprüche 1 bis 6, **dadurch gekennzeichnet, dass** die Sichelspitze (103, 106) rechtwinkelig zur Spanfläche (60) weniger als den halben Kerndurchmesser (Dₖ) einnimmt.

13. Selbstbohrende Schraube nach Anspruch 12, **dadurch gekennzeichnet, dass** der Bohrteil (100) in einem an die Bohrspitze (20) anschließenden Bereich einen Außendurchmesser hat, der um eine kleine Strecke (A) kleiner als der Kerndurchmesser (Dₖ) des Schaftes (14) ist.

14. Selbstbohrende Schraube nach einem der Ansprüche 11 bis 13, **dadurch gekennzeichnet, dass** die Sichelspitze (104) rechtwinkelig zu der Spanfläche (60) mehr als den halben Kerndurchmesser (Dₖ) einnimmt.

15. Selbstbohrende Schraube nach einem der Ansprüche 1 bis 8, **dadurch gekennzeichnet, dass** die Spanfläche (60) von einer Mantellinie des Bohrteils (100) aus nach innen ausgespart ist, so dass die Hauptschneide (30) nur auf einem Teil ihrer Länge zu der Längsachse (80) der Schraube (10) parallel oder im Wesentlichen parallel ist.

16. Selbstbohrende Schraube nach einem der Ansprüche 1 bis 8, **dadurch gekennzeichnet, dass** sich die Hauptschneide (30) in ihrem an die Bohrspitze (20) unmittelbar anschließenden Bereich schräg zu der Längsachse (80) der Schraube (10) erstreckt und an einer Ecke (110) in einen Bereich übergeht, in welchem sie sich parallel oder im Wesentlichen parallel zu der Längsachse (80) der Schraube (10) erstreckt.

17. Selbstbohrende Schraube nach einem der vorhergehenden Ansprüche, **dadurch gekennzeichnet, dass** an dem Übergang zu dem Schaft (14) an der Spanfläche (60) Radien, Fasen oder Freistellungen gebildet sind.

18. Selbstbohrende Schraube nach einem der vorhergehenden Ansprüche, **dadurch gekennzeichnet, dass** das Gewinde (12) auf einem sich entgegengesetzt zu der Bohrspitze (20) an den Bohrteil (100) anschließenden Teil des Schaftes (14) beginnt.

## Claims

1. Self-tapping screw (10) comprising a boring part (100) and a shaft (14) which is provided with a thread (12) and a core diameter (Dₖ), the boring part (100) having a lateral surface (22) and a boring tip (20) which is arranged so as to be off-centre with respect to a longitudinal axis (80) of the screw (10) and having at least one first cutting edge which extends obliquely with respect to the longitudinal axis (80) of the screw (10), and the boring tip (20) lying on an imaginary circle around the longitudinal axis (80) of the screw (10), the diameter of which is the same or substantially the same as the core diameter (Dₖ), **characterised in that** the boring part (100) has a second cutting edge which forms a primary cutting edge (30), is formed substantially by the intersection of a cutting surface (60) and a primary free surface (90) and extends from the boring tip (20) predominantly in parallel with or substantially in parallel with the longitudinal axis (80) of the screw (10), **in that** the first cutting edge is a secondary cutting edge (40) which is formed by the intersection of the cutting surface (60) and a secondary free surface (70) and extends from the boring tip (20) obliquely with respect to the longitudinal axis (80) of the screw (10) over the width of the boring part (100), and **in that** the boring part (100) is designed as a sickle tip (101-107).

2. Self-tapping screw according to claim 1, **characterised in that** the boring tip (20) is formed by the intersection of the cutting surface (60), the secondary free surface (70) and the primary free surface (90).

3. Self-tapping screw according to any of the preceding claims, **characterised in that** the secondary cutting edge (40) forms an angle (γ) of up to 40° with the longitudinal axis (80) of the screw (10).

4. Self-tapping screw according to any of the preceding claims, **characterised in that** the lateral surface (22) of the boring part (100) has a diameter (Dₐ) which is the same or substantially the same as the core diameter (Dₖ).

5. Self-tapping screw according to any of the preceding claims, **characterised in that** the primary free surface (90) is part of the lateral surface (22) of the boring part (100).

6. Self-tapping screw according to any of the preceding claims, **characterised in that** the sickle tip (101-107) is substantially parallel to the longitudinal axis (80) of the screw (10).

7. Self-tapping screw according to claim 6, **characterised in that** the sickle tip (102, 102, 105, 107) occupies half the core diameter (Dₖ) at a right angle to the cutting surface (60).

8. Self-tapping screw according to any of the preceding claims, **characterised in that** the cutting surface (60) contains the longitudinal axis (80) of the screw (10).

9. Self-tapping screw according to any of claims 1 to 7, **characterised in that** the cutting surface (60) forms an angle (α) of up to 30° with the longitudinal axis (80) of the screw (10).

10. Self-tapping screw according to claim 9, **characterised in that** the primary cutting edge (30), in a region which adjoins the boring tip (20), is inclined with respect to a lateral line of the lateral surface (22) by a small angle (β) of up to 10° with respect to the longitudinal axis (80) of the screw (10).

11. Self-tapping screw according to any of claims 1 to 6, **characterised in that** the cutting surface (60) is oriented in the longitudinal direction of the screw (10) and subsequently towards the boring tip (20) in parallel with or substantially in parallel with the longitudinal axis (80) of the screw (10).

12. Self-tapping screw according to any of claims 1 to 6, **characterised in that** the sickle tip (103, 106) occupies less than half the core diameter (Dₖ) at a right angle to the cutting surface (60).

13. Self-tapping screw according to claim 12, **characterised in that** the boring part (100) has, in a region which adjoins the boring tip (20), an outer diameter which is smaller than the core diameter (Dₖ) of the shaft (14) by a small distance (A).

14. Self-tapping screw according to any of claims 11 to 13, **characterised in that** the sickle tip (104) occupies more than half the core diameter (Dₖ) at a right angle to the cutting surface (60).

15. Self-tapping screw according to any of claims 1 to 8, **characterised in that** the cutting surface (60) is recessed inwards, from a lateral line of the boring part (100), so that only part of the length of the primary cutting edge (30) is parallel to or substantially parallel to the longitudinal axis (80) of the screw (10).

16. Self-tapping screw according to any of claims 1 to 8, **characterised in that** the primary cutting edge (30), in its region which directly adjoins the boring tip (20), extends obliquely with respect to the longitudinal axis (80) of the screw (10) and, at a corner (110), transitions into a region in which it extends in parallel with or substantially in parallel with the longitudinal axis (80) of the screw (10).

17. Self-tapping screw according to any of the preceding claims, **characterised in that**, at the transition to the shaft (14), radii, bevels or recesses are formed on the cutting surface (60).

18. Self-tapping screw according to any of the preceding claims, **characterised in that** the thread (12) begins at a part of the shaft (14) which adjoins the boring part (100) so as to be opposite the boring tip (20).

## Revendications

1. Vis autotaraudeuse (10) ayant une partie de perçage (100) et une tige (14) équipée d'un filetage (12) et ayant un diamètre de noyau (D_{K}), la partie de perçage (100) ayant une surface enveloppe (22) et une pointe perceuse (20) décentrée par rapport à l'axe longitudinal (80) de la vis (10) et comportant au moins une première arête qui s'étend obliquement par rapport à l'axe longitudinal (80) de la vis (10), et la pointe perceuse (20) étant située sur un cercle imaginaire autour de l'axe longitudinal (80) de la vis (10) dont le diamètre est égal ou essentiellement égal au diamètre de noyau (Dₖ),
**caractérisée en ce que**
- la partie de perçage (100) comporte une deuxième arête formant une arête principale (30) qui est essentiellement formée par la tranche d'une surface d'attaque (60) et d'une face de dépouille principale (90), et qui s'étend à partir de la pointe perceuse (20), principalement parallèlement ou essentiellement parallèlement à l'axe longitudinal (80) de la vis (10),
- la première arête est une arête auxiliaire (40) formée par la tranche de la surface d'attaque (60) et d'une face de dépouille auxiliaire (70) qui s'étend, à partir de la pointe perceuse (20) obliquement par rapport à l'axe longitudinal (80) de la vis (10) sur la largeur de la partie de perçage (100), et
- la partie perceuse (100) est réalisée sous la forme d'une pointe de faucille (101, 107).

2. Vis autotaraudeuse conforme à la revendication 1,
**caractérisée en ce que**
la pointe perceuse (20) est fermée par l'arête de la surface d'attaque (60), la face de dépouille auxiliaire (70) et la face de dépouille principale (90).

3. Vis autotaraudeuse conforme à l'une des revendications précédentes,
**caractérisée en ce que**
l'arête auxiliaire (40) définit un angle (γ) pouvant aller jusqu'à 40° avec l'axe longitudinal (80) de la vis (10).

4. Vis autotaraudeuse conforme à l'une des revendications précédentes,
**caractérisée en ce que**
la surface enveloppe (22) de la partie de perçage (100) a un diamètre (Dₐ) qui est égal ou essentiellement égal au diamètre du noyau (Dₖ).

5. Vis autotaraudeuse conforme à l'une des revendications précédentes,
**caractérisée en ce que**
la face de dépouille principale (90) est une partie de la surface enveloppe (22) de la partie de perçage (100).

6. Vis autotaraudeuse conforme à l'une des revendications précédentes,
**caractérisée en ce que**
la pointe de faucille (101, 107) est essentiellement parallèle à l'axe longitudinal (80) de la vis (10).

7. Vis autotaraudeuse conforme à la revendication 6,
**caractérisée en ce que**
la pointe de faucille (102, 105, 107) occupe la moitié du diamètre du noyau (Dₖ) perpendiculairement à la surface d'attaque (60).

8. Vis autotaraudeuse conforme à l'une des revendications précédentes,
**caractérisée en ce que**
la surface d'attaque (60) comprend l'axe longitudinal (80) de la vis (10).

9. Vis autotaraudeuse conforme à l'une des revendications 1 à 7,
**caractérisée en ce que**
la surface d'attaque (60) définit un angle (α) pouvant aller jusqu'à 30° avec l'axe longitudinal (80) de la vis (10).

10. Vis autotaraudeuse conforme à la revendication 9,
**caractérisée en ce que**
l'arête principale (30) est inclinée, dans une zone se connectant à la pointe perceuse (20) d'un petit angle (β) pouvant aller jusqu'à 10° par rapport à l'axe longitudinal (80) de la vis (10) à l'opposé de la génératrice de la surface enveloppe (22).

11. Vis autotaraudeuse conforme à l'une des revendications 1 à 6,
**caractérisée en ce que**
la surface d'attaque (60) est orientée dans la direction longitudinale de la vis (10) et en connexion avec la pointe perceuse (20) parallèlement ou essentiellement parallèlement à l'axe longitudinal (80) de la vis (10).

12. Vis autotaraudeuse conforme à l'une des revendications 1 à 6,
**caractérisée en ce que**
la pointe de faucille (103, 106) occupe moins de la moitié du diamètre du noyau (Dₖ) perpendiculairement à la surface d'attaque (60).

13. Vis autotaraudeuse conforme à la revendication 12,
**caractérisée en ce que**
la partie de perçage (100) a dans une zone se connectant à la pointe perceuse (20) un diamètre externe qui est inférieur d'une petite valeur (A) au diamètre (Dₖ) du noyau de la tige (14).

14. Vis autotaraudeuse conforme à l'une des revendications 11 à 13,
**caractérisée en ce que**
la pointe de faucille (104) occupe plus de la moitié du diamètre du noyau (Dₖ) perpendiculairement à la surface d'attaque (60).

15. Vis autotaraudeuse conforme à l'une des revendications 1 à 8,
**caractérisée en ce que**
la surface d'attaque (60) est évidée vers l'intérieur à partir de la génératrice de la partie de perçage (100) de sorte que l'arête principale (30) ne soit parallèle ou essentiellement parallèle à l'axe longitudinal (80) de la vis (10) que sur une partie de sa longueur.

16. Vis autotaraudeuse conforme à l'une des revendications 1 à 8,
**caractérisée en ce que**
l'arête principale (30) s'étend dans sa zone se connectant directement à la pointe perceuse (20) obliquement par rapport à l'axe longitudinal (80) de la vis (10), et passe au niveau d'un coin (110) dans une zone dans laquelle elle s'étend parallèlement ou essentiellement parallèlement à l'axe longitudinal (80) de la vis (10).

17. Vis autotaraudeuse conforme à l'une des revendications précédentes,
**caractérisée en ce qu'**
au niveau de la transition avec la tige (14), des rayons, des chanfreins ou des espaces libres sont formés sur la surface d'attaque (60).

18. Vis autotaraudeuse conforme à l'une des revendications précédentes,
**caractérisée en ce que**
le filetage (12) commence sur une partie de la tige (14) se raccordant à la partie de perçage (100) à l'opposé de la pointe perceuse (20).
